# EUROPEAN PATENT APPLICATION

(11) **EP 2 273 292 A1**
(43) Date of publication of application: **12.01.2011**
(21) Application number: 09731951.1
(22) Date of filing: 15.04.2009
(51) Int. Cl.: G02B 6/13, G02B 6/12

(54) **METHOD OF MANUFACTURING PREFORM FOR OPTICAL WAVEGUIDE**

(30) Priority: 15.04.2008 JP 2008105961; 19.06.2008 JP 2008160464; 31.07.2008 JP 2008198493
(71) Applicant: Sumitomo Electric Industries, Ltd., Chuo-ku Osaka-shi Osaka 541-0041 (JP)
(72) Inventor: SASAOKA, Eisuke, Yokohama-shi Kanagawa 244-8588 (JP); NAKAMAE, Kazuo, Yokohama-shi Kanagawa 244-8588 (JP); TARU, Toshiki, Yokohama-shi Kanagawa 244-8588 (JP); NAGASHIMA, Takuji, Yokohama-shi Kanagawa 244-8588 (JP)
(74) Representative: HOFFMANN EITLE
(86) International application number: PCT/JP2009/057604
(87) International publication number: WO 2009/128480

(57) **Abstract**

The present invention relates to an optical waveguide manufacturing method, which excels in mass productivity of a planar optical waveguide. In an aggregating step, plural members (20), which have a rod (21) or pipe (22) shape respectively, are arranged and bundled so as to constitute a substantially similar figure to at least a part of a desired waveguide pattern on a cross-section perpendicular to the longitudinal direction of the members (20). The plural members (20) bundled in the aggregating step are, after being softened by heating, elongated in a longitudinal direction thereof in an elongating step, whereby an elongated body is formed. The elongated body formed in the elongating step is cut along a plane perpendicular to the longitudinal direction of the elongated body in a cutting step. By these steps, a planar optical waveguide, on which a waveguide pattern based on a micro-structure is formed, is manufactured.

## Description

### Technical Field

The present invention relates to a method of manufacturing a planar optical waveguide which is constituted by plural members, and has a waveguide pattern of an optical waveguide area on a cross-sectional surface perpendicular to the longitudinal direction of the plural members, and a method of manufacturing a optical waveguide preform. In the present specification, "an optical waveguide" refers to "a chip in which an optical waveguide area is formed".

### Background Art

A planar optical waveguide on which a waveguide pattern is formed is described in Non-patent Document 1. However Non-patent Document 1 does not mention a method of manufacturing an optical waveguide. Patent Document 1, on the other hand, discloses a method of manufacturing the planar optical waveguide.

### Citation List

### Patent Document

Patent Document 1: WO 20051085921

### Non-patent Document

Non-patent Document 1: Yasuhide Tsuji, et al, "Design of Optical Circuit Devices Based on Topology Optimization", IEEE PHOTONICS TECHNOLOGY LETTERS, Vol. 18, No. 7, pp. 850-852 (2006)

### Summary of Invention

### Problems that the Invention is to Solve

The present inventors have examined the above prior art, and as a result, have discovered the following problems. That is, in the optical waveguide manufacturing method disclosed in Patent Document 1, the manufacturing efficiency of the planar optical waveguide is low, and therefore mass productivity is not good.

The present invention has been developed to eliminate the problems described above. It is an object of the present invention to provide an optical waveguide manufacturing method which excels in mass productivity of a planar optical waveguide.

### Means for Solving the Problems

An optical waveguide preform manufacturing method according to the present invention is a method of manufacturing a preform of a planar optical waveguide which is constituted by plural members and has a waveguide pattern of a refractive index distribution on a cross-section perpendicular to the longitudinal direction of the plural members. The manufacturing method has an aggregating step and an elongating step. In the aggregating step, plural members including plural first members and plural second members are disposed so that the waveguide pattern is formed, and an aggregate is thereby formed. In the elongating step, the aggregate is softened by heating, and then the aggregate is elongated in the longitudinal direction to obtain an elongated body as a preform of the optical waveguide.

In the optical waveguide preform manufacturing method according to the present invention, it is preferable that in the aggregating step, the first members and the second members are disposed, and then the disposed plural members are housed in a pipe for aggregation. It is preferable that the plural members are comprised of glass and have a rod shape or a pipe shape. It is also preferable that the first member has a high refractive area, and the second member has a low refractive area.

Here the outer shapes of the plural members, bundled in the aggregating step, match with each other. It is preferable that the plural members bundled in the aggregating step are disposed such that the cross-section thereof has a close-packed structure. It is preferable that the elongated body is elongated, in the elongating step, so that the reduction rate of the elongated body in a direction perpendicular to the longitudinal direction of the elongated body is 1% or less. It is preferable that the plural second members are solid materials which have substantially the same outer diameter with a hole, and are disposed around the area formed by the first members. It is preferable that the first members are solid materials having a high refractive index, the second members are solid materials having a low refractive index, and the absolute value of a relative refractive index difference of the second members with respect to the first members is not less than 1%. It is also preferable that the plural second members have substantially the same outer diameter with a hole, and are disposed around the area formed by the first members, so as to form a photonic band gap.

In the optical waveguide preform manufacturing method according to the present invention, the preform manufactured by the optical waveguide preform manufacturing method may be used as one of the plural members.

In the optical waveguide preform manufacturing method according to the present invention, it is preferable that third members are prepared as one of the plural members, and the third members are disposed in a boundary portion between the first members and the second members in the aggregating step. In this case, in a step of manufacturing the third members, an aggregating step and an elongating step, similar to the optical waveguide preform manufacturing method are carried out. Thereby, the waveguide pattern around the boundary portion of the first members and the second members becomes a waveguide pattern of the third members.

In the optical waveguide preform manufacturing method according to the present invention, the first members may have eleventh members as a member constituting a part of an area of the waveguide pattern in a light wave guiding direction. In this case, an aggregating step and an elongating step, similar to the optical waveguide preform manufacturing method, are executed in a step of manufacturing the eleventh members. At this time, a waveguide pattern constituting a part of an area of the waveguide pattern in a light wave guiding direction becomes a waveguide pattern of the eleventh members.

In the optical waveguide preform manufacturing method according to the present invention, the first members may have eleventh members and twelfth members, as members constituting adjacent areas of the waveguide pattern in a light wave guiding direction. In this case, in each of the steps of manufacturing the eleventh members and twelfth members, an aggregating step and an elongating step, similar to the optical waveguide preform manufacturing method, are executed. Thereby a waveguide pattern constituting the adjacent areas of the waveguide pattern in the light wave guiding direction becomes the waveguide pattern of the eleventh members and twelfth members.

In the optical waveguide preform mentioned manufacturing method according to the present invention, hollow pipes may be disposed in an area where light propagates in the aggregating step.

An optical waveguide manufacturing method according to the present invention comprises a cutting step of cutting the preform, manufactured according to the optical waveguide preform manufacturing method (the optical waveguide preform manufacturing method according to the present invention), along a plane perpendicular to the longitudinal direction of the preform, to manufacture the optical waveguide. The optical waveguide manufacturing method according to the present invention may also comprises a polishing step of optically polishing the cut surface created by cutting in the cutting step.

A different optical waveguide can be manufactured using plural optical waveguides manufactured respectively by the optical waveguide manufacturing method according to the present invention. Concretely, in the optical waveguide manufacturing method, a first optical waveguide and a second optical waveguide are prepared, and an optical waveguide is manufactured such that an emitting end of the first optical waveguide and an entering end of the second optical waveguide are optically coupled on a same plane.

A sensor according to the present invention has a planar optical waveguide having a waveguides pattern on a predetermined surface. Concretely, in the sensor, a hole penetrating in a direction perpendicular to the predetermined surface is formed in an area in which light of the waveguide pattern is guided.

In the sensor according to the present invention, the waveguide pattern may constitute a Mach-Zehnder interferometer. In this case, the hole is disposed at or near the Mach-Zehnder interferometer, so that the intensity of the interfering light is changed by a measurement target object inserted into the hole, whereby the phase of the propagating light changes. In the sensor, the waveguide pattern may constitute a ring resonator. In this case, the hole is disposed at or near the ring resonator, so that the intensity of resonating light or the wavelength of the resonance is changed by a measurement target object inserted into the hole, whereby the phase of the propagating light changes.

A detection method according to the present invention detects a measurement target object by disposing the measurement target object in the hole and by measuring the propagating light, which is guided through the optical waveguide, using the sensor (the sensor according to the present invention). In the detection method, presence, type or density of the measurement target object is detected based on the change of loss of the propagating light or the dependency of loss on the wavelength. In the detection method, the presence, type or density of the measurement target object can also be detected based on the change of phase of the propagating light.

### Effects of the Invention

The optical waveguide manufacturing method according to the present invention improves mass productivity of a planar optical waveguide.

### Brief Description of Drawings

Fig. 1 is a plan view showing a configuration example of an optical waveguide to be manufactured by the optical waveguide manufacturing method according to a first embodiment;
Fig. 2 is a flow chart for explaining the optical waveguide manufacturing method according to the first embodiment;
Fig. 3 is a view for explaining an aggregating step S1 in the optical waveguide manufacturing method according to the first embodiment;
Fig. 4 is a view for explaining an aggregating step S1 in the optical waveguide manufacturing method according to the first embodiment;
Fig. 5 is a view for explaining an elongating step S2 in the optical waveguide manufacturing method according to the first embodiment;
Fig. 6 is a view for explaining a cutting step S3 in the optical waveguide manufacturing method according to the first embodiment;
Fig. 7 is a view showing an example of a housing structure of the optical waveguide 1 manufactured by the optical waveguide manufacturing method according to the first embodiment;
Fig. 8 is a flow chart for explaining the optical waveguide manufacturing method according to a second embodiment;
Fig. 9 is a view for explaining a first configuration example of the optical waveguide manufacturing method according to the second embodiment;
Fig. 10 is a view for explaining a second configuration example of the optical waveguide manufacturing method according to the second embodiment;
Fig. 11 is a view for explaining a third configuration example of the optical waveguide manufacturing method according to the second embodiment (part 1);
Fig. 12 is a view for explaining a third configuration example of the optical waveguide manufacturing method according to the second embodiment (part 2);
Fig. 13 is a view for explaining a third configuration example of the optical waveguide manufacturing method according to the second embodiment (part 3);
Fig. 14 is a view for explaining a fourth configuration example of the optical waveguide manufacturing method according to the second embodiment (part 1);
Fig. 15 is a view for explaining a fourth configuration example of the optical waveguide manufacturing method according to the second embodiment (part 2);
Fig. 16 is a view for explaining a fourth configuration example of the optical waveguide manufacturing method according to the second embodiment (part 3);
Fig. 17 is a view for explaining a fifth configuration example of the optical waveguide manufacturing method according to the second embodiment;
Fig. 18 is a view for explaining a first configuration example of a sensor using the planar optical waveguide manufactured by the optical waveguide manufacturing method according to a third embodiment;
Fig. 19 is a view for explaining a second configuration example of a sensor using the planar optical waveguide manufactured by the optical waveguide manufacturing method according to the third embodiment;
Fig. 20 is a view for explaining a third configuration example of a sensor using the planar optical waveguide manufactured by the optical waveguide manufacturing method according to the third embodiment;
Fig. 21 is a view for explaining a fourth configuration example of a sensor using the planar optical waveguide manufactured by the optical waveguide manufacturing method according to the third embodiment;
Fig. 22 is a view for explaining a fifth configuration example of a sensor using the planar optical waveguide manufactured by the optical waveguide manufacturing method according to the third embodiment; and
Fig. 23 is a view for explaining a sixth configuration example of a sensor using the planar optical waveguide manufactured by the optical waveguide manufacturing method according to the third embodiment.

### Description of Embodiments

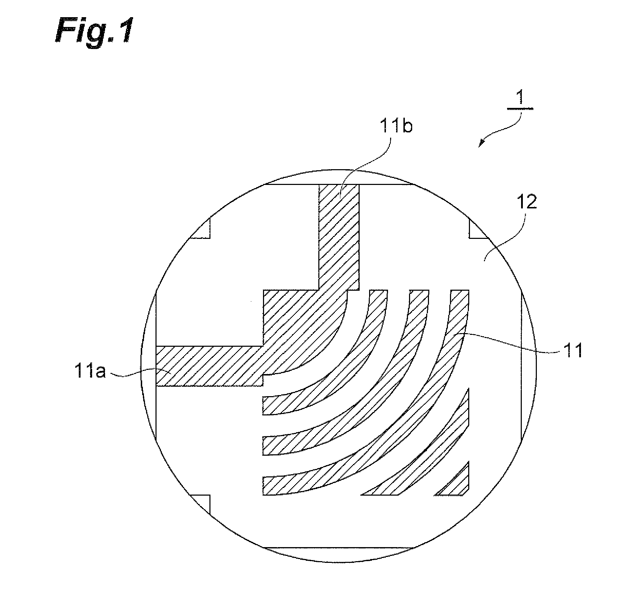

In the following, embodiments of the optical waveguide manufacturing method will now be explained in detail with reference to Fig. 1 to Fig. 23. In the descriptions of the drawings, a same area or a same composing member is denoted with a same reference symbol, for which redundant description is omitted.

### (First embodiment)

Fig. 1 is a plan view showing a configuration example of an optical waveguide to be manufactured by the optical waveguide manufacturing method according to the first embodiment. The optical waveguide 1 shown in Fig. 1 has two parallel principal planes, and the thickness, that is, the distance between these two principal planes, is constant. The optical waveguide 1 has a uniform refractive index in a direction perpendicular to the principal plane, and has a high refractive index area 11 (core area) and a low refractive index area 12 (cladding area) on a surface parallel with the principal plane. The high refractive index area 11 is hatched in Fig. 1.

Within the high refractive index area 11, the areas 11a and 11b, which extend perpendicular to the end faces, are areas for inputting/outputting light from/to the outside, and form a 90° angle. In the optical waveguide 11, the light which is inputted to the area 11a from the outside propagates through the area 11b after propagation in the area 11a, and is outputted to the outside from the area 11b. Thereby the traveling direction of the light is deflected 90° in the optical waveguide 1 with low loss.

In order to make the refractive index of the high refractive index area 11, including the areas 11a and 11b, higher than the refractive index of the low refractive index area 12 in the optical waveguide 1, the high refractive index area 11 is created to be a micro-structure comprised of solid silica glass, with plural equally spaced holes, while the low refractive index area 12 is comprised of silica glass as background material.

The refractive index difference between the high refractive index area 11 and the low refractive index area 12 can also be created by forming a micro-structure in which plural solid materials, comprised of high refractive index materials, are disposed at a predetermined interval, while the low refractive index area 12 is comprised of pure silica glass. It is preferable that the absolute value of the relative refractive index difference of the solid material, with respect to the material of the low refractive index area 12, is not less than 1%. Pure silica glass may be used for the solid material of the high refractive index area 11, while a material with a lower refractive index than that of the silica glass is used for the low refractive index area 12. To create the refractive index difference, a refractive index increasing agent (e.g. GeO₂) or a refractive index decreasing agent (e.g. F member) is added.

The optical waveguide 1, to be manufactured by the optical waveguide manufacturing method according to the first embodiment may have a structure to confine light to the high refractive index area 11 so as to waveguide the light, using the refractive index difference of the high refractive index area 11 and the low refractive index area 12, or may have a structure to confine the light to a photonic band gap formed by a micro-structure so as to waveguide the light. In the latter case, refractive indices of the materials to be used for the core and cladding respectively, and the diameter and pitch of the plural holes, are set appropriately.

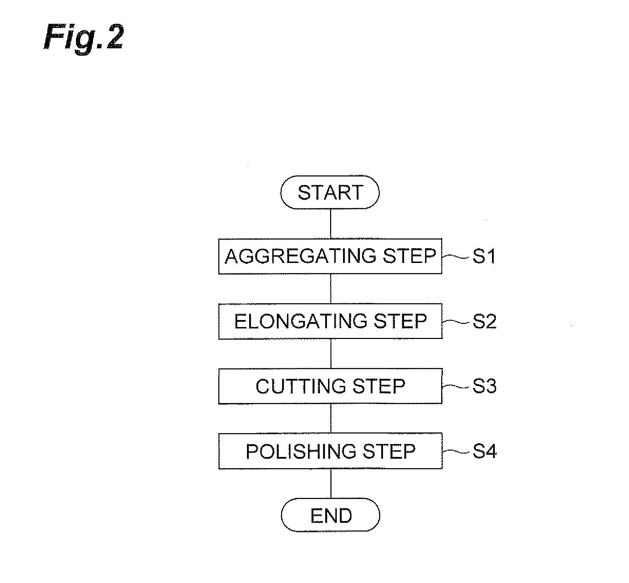

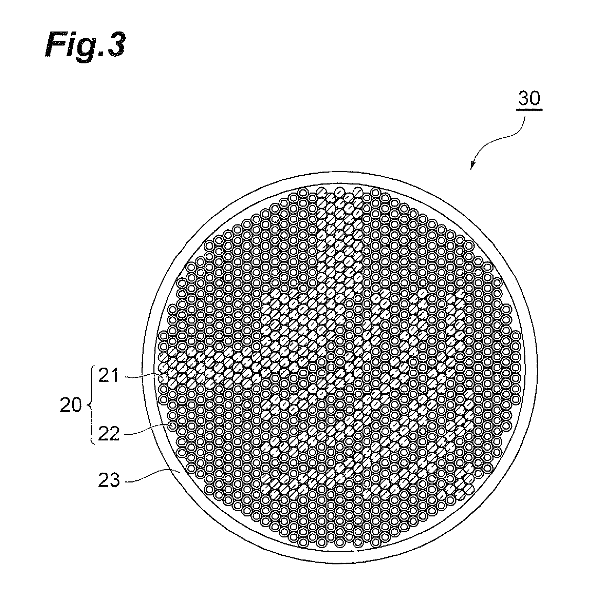

Now a method for manufacturing the optical waveguide 1 which has a low refractive index area 12, where a micro-structure is formed by plural holes disposed with a predetermined spacing on the background material, will be described. This optical waveguide manufacturing method is a method for manufacturing a planar optical waveguide 1, on which a waveguide pattern based on the micro-structure is formed. Fig. 2 is a flow chart for explaining the optical waveguide manufacturing method according to the first embodiment. The optical waveguide manufacturing method according to the first embodiment has an aggregating step S1, an elongating step S2, a cutting step S3 and a polishing step S4, and the optical waveguide 1 is manufactured via these steps, S1 to S4, sequentially. Figs. 3 to 7 are views for explaining each step of the optical waveguide manufacturing method according to the first embodiment.

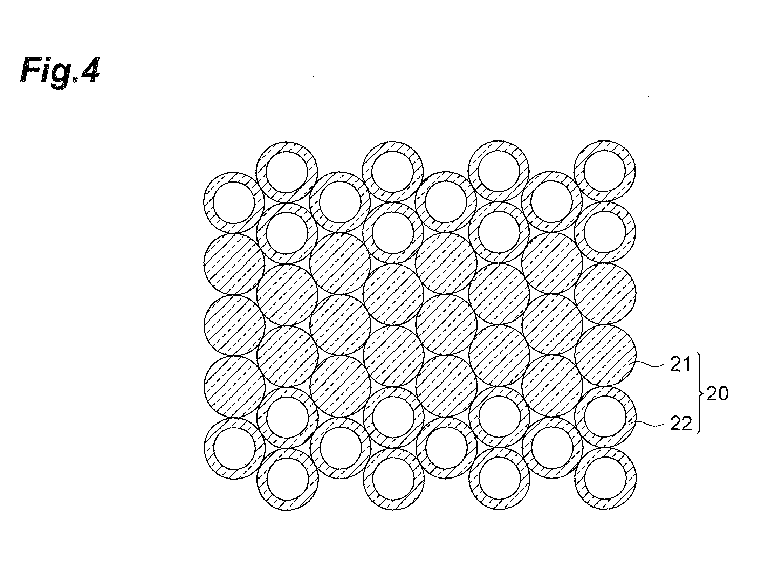

Figs. 3 and 4 are views for explaining the aggregating step S1 of the optical waveguide manufacturing method according to the first embodiment, and shows a cross-section perpendicular to the longitudinal direction of the aggregate 30 formed in the aggregating step S1. Fig. 4 is an enlarged view of a part of Fig. 3 (an area including the area 11a and a neighboring area thereof in Fig. 1). In the aggregating step S1, plural members 20 constituted by rods 21 or pipes 22 are bundled. At this time, the plural members 20 are disposed such that the waveguide pattern of the optical waveguide 1 is formed in a cross-section perpendicular to the longitudinal direction of the plural members 20, whereby the aggregate 30 is formed. In other words, plural rods 21 are disposed so as to form the same pattern as the high refractive index area 11 in Fig. 1, and plural pipes 22 are disposed so as to form the same pattern as the low refractive index area 12. The respective hollow areas 22 of the plural pipes become plural holes for forming the micro-structure in the optical waveguide 1 after manufacturing.

In the aggregate 30, it is preferable that the bundled plural members 20 are housed inside a pipe 23 for aggregation, having a low refractive index. It is preferable that the plural members 20 have the same outer diameter, and the plural members 20 are disposed to have a close-packed structure. The plural members 20 are comprised of a transparent material, such as silica glass. The outer diameter of each of the plural members 20 is 1 mm, for example. And depending on the design, the pipe for aggregation 23 may have a high refractive index, instead of a low refractive index, or may be removed later.

In Fig. 4, there are three rods 21 in the width of the portion to be the area 11 a of the high refractive index area 11, but the waveguide pattern can be implemented more accurately by increasing the number of members 20 per unit area (that is, by decreasing the diameter of the member 20).

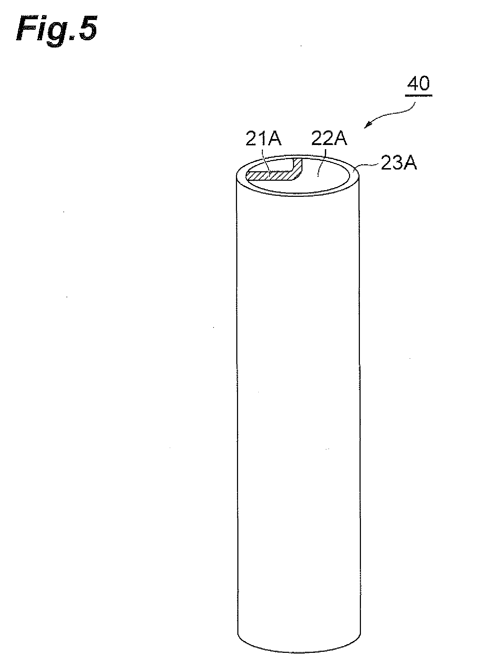

Fig. 5 is a view for explaining the elongating step S2 of the optical waveguide manufacturing method according to the first embodiment, and shows a perspective view of an elongated body 40 formed in the elongating step S2. In the elongating step S2, the aggregate 30 in which the plural members 20 are bundled in the aggregating step S1 is softened by heating, and then the aggregate 30 is elongated as a whole along the longitudinal direction thereof, to thereby form the elongated body 40. In the elongating step S2, it is preferable that the elongated body 40 is formed by being elongated so that the reduction rate in a direction perpendicular to the longitudinal direction thereof (ratio of the outer diameter of the elongated body 40 to the outer diameter of the aggregate 30) is 1% or less. At this time, the aggregate 30 is elongated, while maintaining the shape of the waveguide pattern, to be the elongated body 40. In other words, the rod 21 A, pipe 22A and pipe for aggregation 23A, constituting the cross-section of the elongated body 40, correspond to the rod 21, pipe 22, and pipe for aggregation 23 constituting the cross-section of the aggregate 30 respectively. The respective hollow portions of the plural pipes 22 are maintained to be hollow in the elongated body 40. By this elongating, the dimensions of the cross-section are decreased to 1/4 x 10³ , and the length thereof increases to 16 x 10⁶ times.

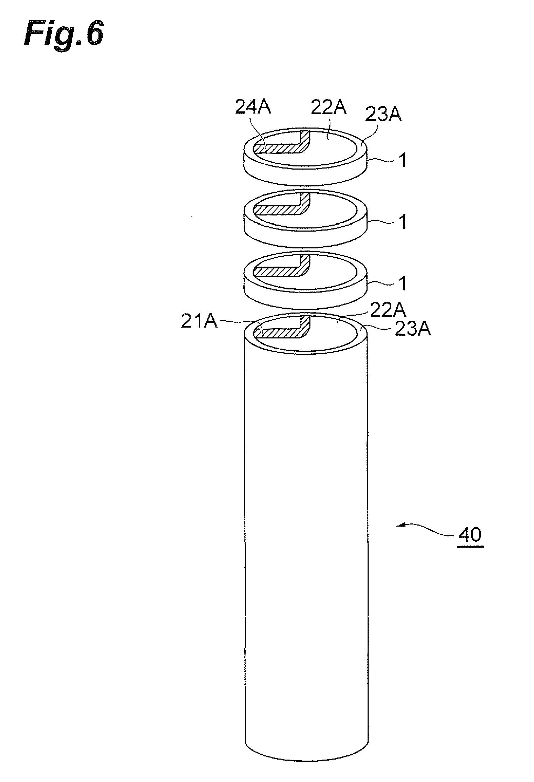

Fig. 6 is a view for explaining a cutting step S3 of the waveguide manufacturing method according to the first embodiment, and shows a state of cutting the elongated body 40 in the cutting step S3. In the cutting step S3, the optical waveguide 1 is manufactured by cutting the elongated body 40, created in the elongating step S2, along a plane perpendicular to the longitudinal direction. At this time, the amount of thickness to decrease during the subsequent polishing step S4 is considered, and the elongated body 40 is cut so that the thickness after polishing becomes the desired dimension, whereby the optical waveguide 1 is manufactured. For this cutting, a diamond blade can be used, and a technology for manufacturing wafers by slicing a silicon ingot may be applied.

The roughness of the cut surface of the optical waveguide 1 created in the cutting step S3 influences the loss of light, which propagates while being confined to the high refractive index, area 11 of the optical waveguide 1. When the optical loss is within a range which causes no problem, then the cut surface needs no processing. But when the roughness of the cut surface causes an optical loss problem, it is effective to optically polish the cut surface. Therefore in the polishing step S4, the cut surface in the cutting step S3 is optically polished. Thereby the optical loss in the optical waveguide 1 can be decreased. By this polishing, the thickness of the optical waveguide 1 becomes the desired dimension.

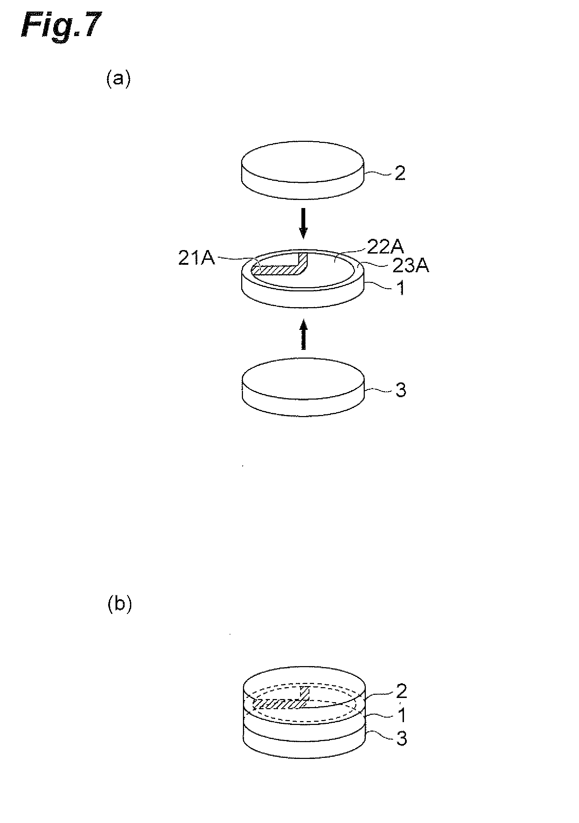

An optical fiber may optically be connected to each end face of the areas 11a and 11b of the optical waveguide 1, or the optical waveguide 1, including this coupling portion, may be housed in a package. When housing the optical waveguide 1, it is preferable that a transparent plate, 2 or 3, is attached to each principal plane, as shown in Fig. 7. Fig. 7 is a view for explaining an example of the housing structure of the optical waveguide 1 manufactured by the optical waveguide manufacturing method according to the first embodiment. These transparent plates 2 and 3 have a refractive index smaller than the refractive index of the high refractive index area 11 of the optical waveguide 1, and function as a cladding. The transparent plates 2 and 3 are comprised of silica glass, for example. Use of this structure makes it easier to handle the optical waveguide 1. Both principal planes of the optical waveguide 1 are protected, so loss due to light scattering on the principal planes is decreased. A wave-guiding mode and polarization characteristic control of propagating light also become possible. Air may be used as a cladding, without attaching anything to either of the principal planes of the optical waveguide 1.

Each width of the areas 11 a and 11b of the optical waveguide 1 can be uniform, the refractive index thereof can be uniform, but the width may increase closer to the end face so as to be tapered, or the relative refractive index difference may decrease closer to the end face. When such a structure is used, the optical coupling efficiency between each end face of the areas 11a and 11b of the optical waveguide 1 and a. standard optical fiber can improve.

As described above, the optical waveguide manufacturing method according to the first embodiment implements high efficiency when manufacturing a planar optical waveguide, and excels in mass productivity. For example, it is assumed that the length of the plural members 20 used in the aggregating step S1 is 100 mm, the length of the elongated body 40 which is formed by elongating the aggregate 30 in the drawing step S2 is 16 x 10⁶ times the aggregate 30, and the thickness of the optical waveguide 1 created by cutting the drawn body 40 in the cutting step S3 is 10 µm. In this case, about 160,000,000,000 optical waveguides 1 are created by cutting the drawn body 40 in the cutting step S3.

In the optical waveguide manufacturing method according to the first embodiment, the plural members 20 constituted by the rods 21 or pipes 22 are bundled in the aggregating step S1. The plural members 20 includes members constituting the high refractive index area 11 (e.g. rods 21 in Fig. 4) and members constituting the low refractive index area 12 (e.g. pipes 22 in Fig. 4), and these plural members 20 are bundled and disposed so as to form a substantially similar figure to the waveguide pattern of the optical waveguide 1 in a cross-section perpendicular to the longitudinal direction thereof, whereby the aggregate 30 is formed. Hence this optical waveguide manufacturing method excels in flexibility in forming waveguide patterns.

### (Second embodiment)

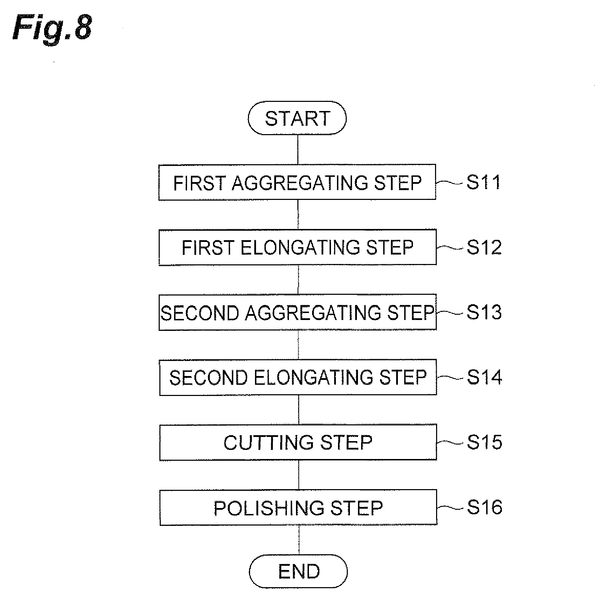

Fig. 8 is a flow chart for explaining the optical waveguide manufacturing method according to the second embodiment. The optical waveguide manufacturing method according to the present embodiment has a first aggregating step S11, a first elongating step S2, a second aggregating step S 13, a second elongating step S14, a cutting step S15 and a polishing step S16, and a planar optical waveguide on which a waveguide pattern, based on a micro-structure, is manufactured via the steps S11 to S16 sequentially.

Each of the first aggregating step S11 and the second aggregating step S13 according to the second embodiment is the same as the aggregating step S 1 according to the first embodiment. Each of the first elongating step S12 and the second elongating step S14 according to the second embodiment is the same as the elongating step S2 according to the first embodiment. The cutting step S15 according to the second embodiment is the same as the cutting step S3 according to the first embodiment. The polishing step S16 according to the second embodiment is the same as the polishing step S4 according to the first embodiment.

In the first aggregating step S11, plural members having a rod shape or pipe shape respectively are disposed and bundled so as to form a similar figure of each portion of a predetermined waveguide pattern. In the first elongating step S12, the plural members (first members) bundled in the first aggregating step S11 are softened by heating and elongated as a whole along the longitudinal direction thereof, whereby a first elongated body is formed. In the second aggregating step S 13, the first elongated body formed in the first elongating step S12 and plural members having a rod or pipe shape respectively (second members, which are different from the first members) are disposed and bundled so as to form a similar figure of at least a part of a desired waveguide pattern. In the second elongating step S14, the plural members bundled in the second aggregating step S13 are softened by heating and elongated as a whole along the longitudinal direction thereof, whereby a second elongated body is formed. In this wary, the aggregating step and elongating step are repeated plural times. In the cutting step S15, the second elongated body formed in the second elongating step S14 is cut along a plane perpendicular to the longitudinal direction thereof, whereby the optical waveguide is manufactured. In the polishing step S16, the cut surface, after being cut in the cutting step S15, is optically polished.

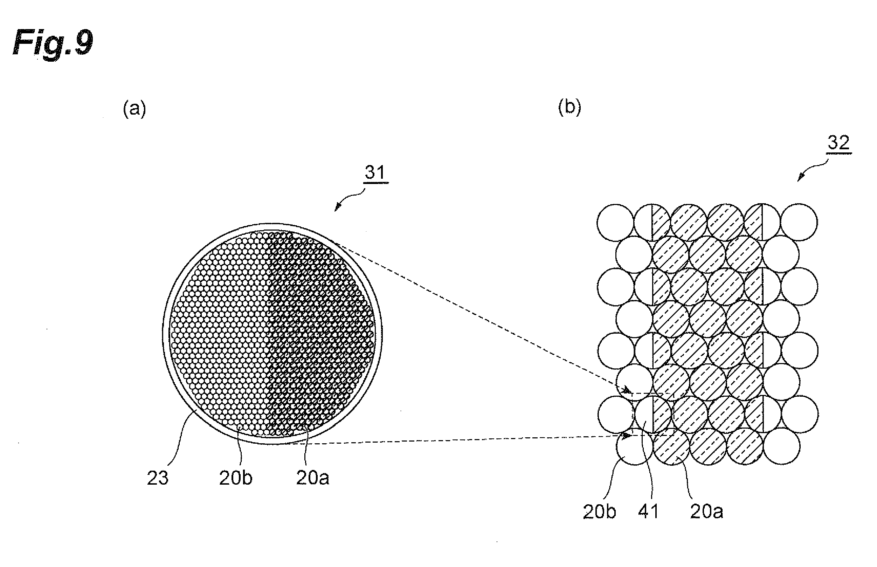

Fig. 9 is a view for explaining a first configuration example of the optical waveguide manufacturing method according to the second embodiment. The area (a) of Fig. 9 shows a cross-sectional view perpendicular to the longitudinal direction of the aggregate 31 formed in the first aggregating step S11. The area (b) of Fig. 9 shows a cross-sectional view perpendicular to the longitudinal direction of the aggregate 32 formed by the second aggregating step S13.

As shown in the area (a) of Fig. 9, in the first aggregating step S11, plural high refractive index rods 20a indicated by hatching and plural low refractive index rods 20b are bundled, and these members are housed inside the pipe for aggregation 23. Thereby the aggregate 31 is created. This aggregate 31 is softened by heating and elongated in the longitudinal direction thereof in the first elongating step S12, whereby the first elongated body 41 is formed.

As shown in the area (b) of Fig. 9, in the second aggregating step S13, the plural first elongated bodies 41 formed in the first elongating step S12, plural high refractive index rods 20a and plural low refractive index rods 20b are bundled, and these members are housed inside the pipe for aggregation. Thereby an aggregate 32 is formed. This aggregates 32 is softened by heating and elongated in the longitudinal direction thereof in the second elongating step S 14. As a result, the second elongated body is formed. The second elongated body is cut in the cutting step S15, and the cut surface thereof is polished in the polishing step S16.

Through the steps, a planar waveguide where the core linearly extends as shown in the area (b) of Fig. 9 is manufactured. In this waveguide, the first elongated body 41 formed in the first elongating step S12 is used for the boundary face between the core and cladding. The first elongated body 41 is divided into the high refractive index area (hatched area) and the low refractive index area.

Compared with the case of bundling the high refractive index rods 20a and the low refractive index rods 20b, without using the first elongated bodies 41, in the second aggregating step, and elongating these rods 20a and 20b in the second elongating step, the use of the first elongated bodies 41 in the second aggregating step S13, as described above, can dramatically improve the smoothness of the boundary face between the core any cladding in the manufactured optical waveguide. By improving smoothness of the boundary face between the core and cladding in this way, optical propagation loss can be decreased.

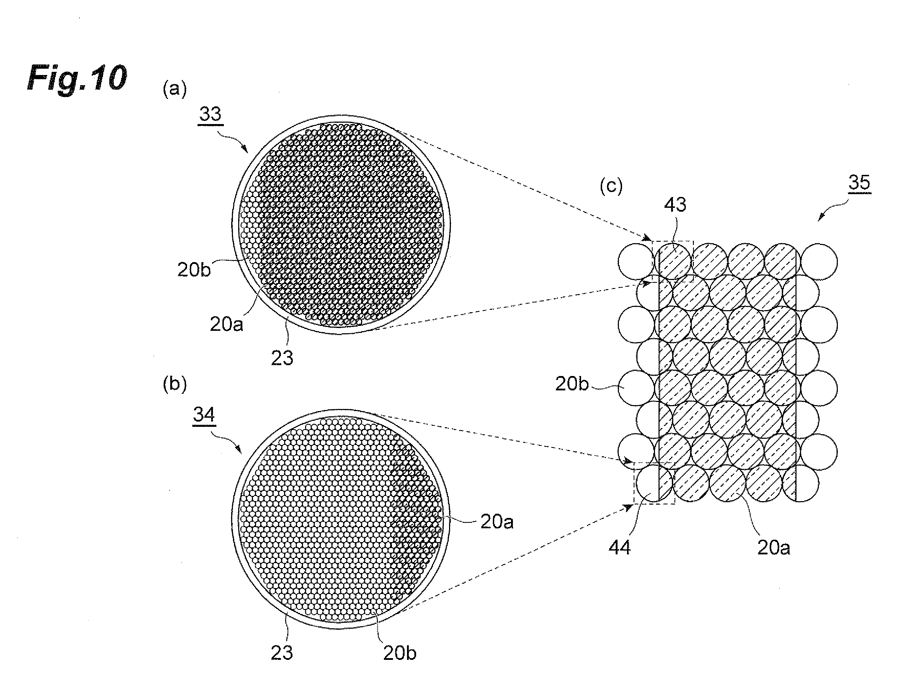

Fig. 10 is a view for explaining a second configuration example of the optical waveguide manufacturing method according to the second embodiment. The areas (a) and (b) of Fig. 10 show cross-sectional views perpendicular to the longitudinal direction of the aggregates 33 and 34 formed in the first aggregating step S11 respectively. The area (c) of Fig. 10 shows a cross-sectional view perpendicular to the longitudinal direction of the aggregate 35 formed in the second aggregating step S13.

As shown in the areas (a) and (b) of Fig. 10, in the first aggregating step S11, plural high refractive index rods 20a indicated by hatching, and plural low refractive index rods 20b, are bundled, and these members are housed inside the pipe for aggregation 23. Thereby the aggregates 33 and 34 are formed. These aggregates 33 and 34 are softened by heating and elongated in the longitudinal direction thereof in the first elongating step S12. As a result, the first elongated bodies 43 and 44 are created. The ratio of the area occupied by the high refractive index rods 20a and the area occupied by the low refractive index rods 20b differs between the aggregate 33 and aggregate 34.

As shown in the area (c) of Fig. 10, in the second aggregating step S13, plural first elongated bodies 43 and 44 formed in the first elongating step S12, plural high refractive index rods 20a and plural low refractive index rods 20b are bundled, and these members are housed inside the pipe for aggregation. Thereby the aggregate 35 is formed. This aggregate 35 is softened by heating and elongated in the second elongating step S14. As a result, the second elongated body is formed. After the second elongated body is cut in the cutting step S15, the cut surface thereof is polished in the polishing step S16.

Through the above-described steps, a planar waveguide where the core linearly extends as shown in the area (c) of Fig. 10 can be manufactured. In this waveguide, the first elongated bodies 43 and 44, formed in the first elongating step S12, are used for the boundary face between the core and cladding. The first elongated bodies 43 and 44 are divided into the high refractive index area (hatched area) and low refractive index area.

Compared with the case of bundling the high refractive index rods 20a and low refractive index rods 20b, without using the first elongated bodies 43 and 44, in the second aggregating step, and elongating the bundled members in the longitudinal direction thereof in the second elongating step, the use of the first elongated bodies 43 and 44 in the second aggregating step S13, as described above, can dramatically improve the smoothness of the boundary surface between the core and cladding in the manufactured optical waveguide. Also in the case of this example, the first elongated bodies 43 and 44 are used for the boundary face between the core and cladding, without using the high refractive index rods 20a and low refractive index rods 20b, so the smoothness of the boundary face between the core and cladding can be further improved.

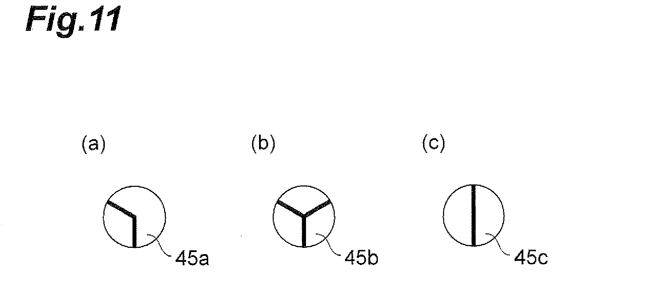

Figs. 11 to 13 are views for explaining a third configuration example of the optical waveguide manufacturing method according to the second embodiment. In Figs. 11 to 13, the bold black line indicates a thigh refractive index area on the cross-section. In the third configuration example, three types of elongated bodies, 45a, 45b and 45c, shown in Fig. 11, are formed in the first elongating step S12. The elongated body 45a shown in the area (a) of Fig. 11 has a high refractive index area deflected 60°. The elongated body 45b shown in the area (b) of Fig. 11 has a high refractive index area branched in a Y-shape. And the elongated body 45c shown in the area (c) of Fig. 1 has a linear high refractive index area.

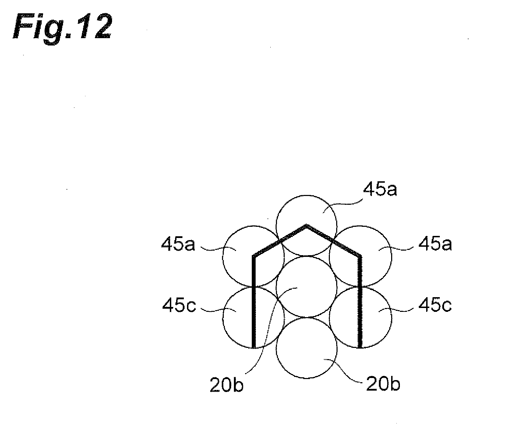

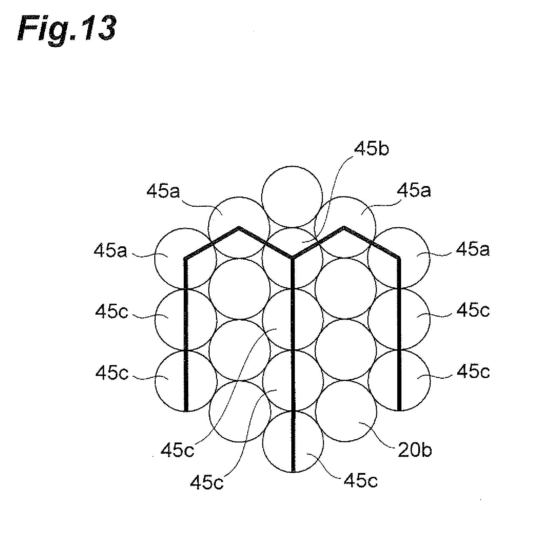

As shown in Figs. 12 and 13, in the second aggregating step S13, the elongated bodies 45a, 45b and 45c and the low refractive index rods 20b are bundled, whereby an aggregate is formed. This aggregate is elongated in the second elongating step S14. As shown in Fig. 12, an optical waveguide, in which input ends and output ends are disposed in the same direction, can be manufactured by appropriately disposing the elongated bodies 45a and 45c. Also, as shown in Fig. 13, an optical waveguide having a 1 x 2 splitter function, in which an input end and two output ends are disposed in a same direction, can be manufactured by appropriately disposing the elongated bodies 45a, 45b and 45c.

In accordance with the first to third configuration examples, in which cross-sections at the first elongated bodies and rods, to be bundled in the second aggregating step S13, are circular, it is important to accurately set the orientation of the first elongated bodies in the second aggregating step. A possible method for controlling the orientation of the first elongated bodies is to open a hole for holding the rod in a part of the first elongated body, and holding this portion to suspend the rod so that the rod turns to a predetermined orientation under its own weight.

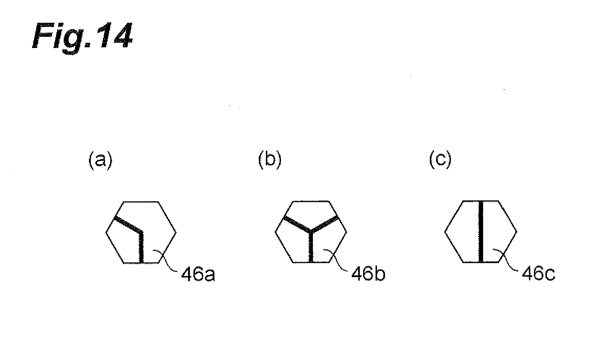

Figs. 14 to 16 are views for explaining a fourth configuration example or the optical waveguide manufacturing method according to the second embodiment. In Figs. 14 to 16, the bold black line indicates a high refractive index area on the cross-section. In the fourth configuration example, three types of elongated bodies, 46a, 46b and 46c, shown in Fig. 14, are formed in the first elongating step S12. The elongated body 46a shown in the area (a) of Fig. 14 has a high refractive index deflected 60°. The elongated body 46b shown in the area (b) of Fig. 14 has a high refractive index area branched in a Y-shape. The elongated body 46c shown in the area (c) of Fig. 14 has a linear high refractive index area.

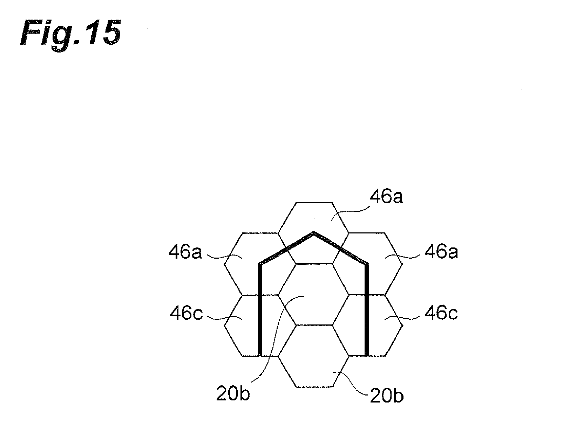

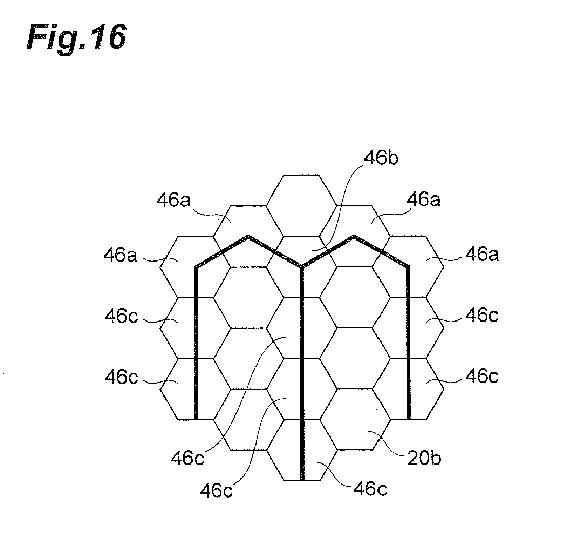

As shown in Fig. 15 and 16, in the second aggregating step S13, the elongated bodies 46a, 46b and 46c and the low refractive index rods 20b are bundled, whereby an aggregate is formed. This aggregate is elongated in the second elongating step S14. As shown in Fig. 15, an optical waveguide, in which input ends and output ends are disposed in a same direction, can be manufactured by appropriately disposing the elongated bodies 46a and 46c. Also, as shown in Fig. 16, an optical waveguide having a 1 x 2 splitter function, where the input end and two output ends are disposed in a same direction, can be manufactured by appropriately disposing the elongated bodies 46a, 46b and 46c.

The cross-sectional shapes of the elongated bodies 45a, 45b and 45c in the third configuration example are circular, but the cross-sectional shapes of the elongated, bodies 46a, 46b and 46c in the fourth configuration example are regular hexagons. The elongated bodies 46a, 46b and 46c having a hexagonal cross-section can be formed by polishing the outer circumferences of the elongated bodies 45a, 45b and 45c having a circular cross-section. In accordance with the fourth configuration example in which the cross-sectional shapes of the elongated bodies 46a, 46b and 46c and the rod 20b are regular hexagons respectively, the orientations of all these members can be accurately set in the second aggregating step S13. Another method for forming an elongated body having a hexagonal cross-section is aggregating rods/pipes in a hexagonal shape without using a pipe for aggregation, or using a hexagonal pipe for aggregation, and elongating this aggregate. The outer circumferences may be polished before elongating when the aggregate is integrated after the aggregating step.

Each of the elongated bodies 45a, 45b and 45c, shown in Fig. 11 as the third configuration example, and the elongated bodies 46a, 46b and 46c, shown in Fig. 14 as the fourth configuration example, may be an member the same as the second elongated body formed in the second configuration example (Fig. 10). In this case, the aggregating step and elongating step are repeated three times for the third configuration example and fourth configuration example. In other words, in the first aggregating step and elongating step, an elongated body having a corresponding pattern on the boundary face of the core and cladding is formed. In the second aggregating step and elongating step, the elongated bodies 45a, 45b, 45c and the elongated bodies 46a, 46b and 46c are formed using the elongated bodies formed in the first aggregating step and elongating step. In the third aggregating step and elongating step, an elongated body having a pattern shown in Fig. 12, Fig. 13, Fig. 15 or Fig. 16 is formed using the elongated bodies 45a, 45b and 45c, or elongated bodies 46a, 46b and 46c formed in the second aggregating step and elongating step. In this way, an optical waveguide with low loss is manufactured. Figs. 12, 13 and 15 show a case of plural elongated bodies being combined, but one type of elongated body, out of the elongated bodies 46a, 46b and 46c, may be combined.

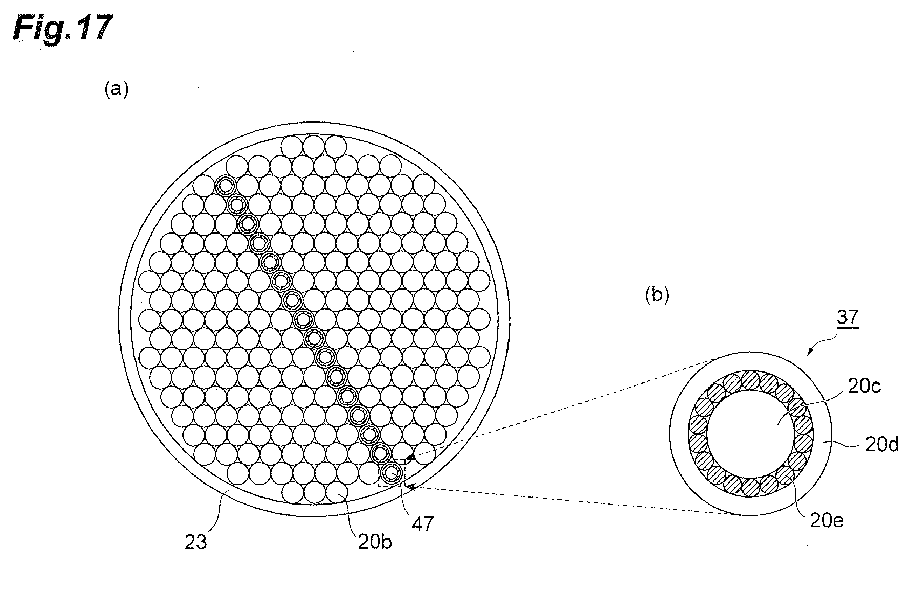

Fig. 17 is a view for explaining a fifth configuration example of the optical waveguide manufacturing method according to the second embodiment. As shown in the area (b) of Fig. 17, according to the fifth configuration example, plural high refractive index rods 20e are disposed between, a low refractive index rod 20c and a low refractive index pipe 20d in the first aggregating step S11. The rod 20c, pipe 20d and rods 20e are bundled, whereby the aggregate 37 is constituted. Then this aggregate 37 is elongated in the first elongating step S12, whereby a first elongated body 47 is formed. In the cross-section of the first elongated body 47, the high refractive index area created by the high refractive index rods 20e has a ring-shape.

As shown in the area (a) of Fig. 17, in the second aggregating step S13, plural first elongated bodies 47 are disposed in a line, the low refractive index rods 20b are disposed can both sides of the plural first elongated bodies 47, and these members are housed inside the pipe for aggregation 23. The aggregate formed like this is elongated in the second elongating step S14. The optical waveguide manufactured like this has a waveguide pattern in which plural ring-shaped high refractive index areas are disposed in a line.

In the optical waveguide having the above-described structure, a ring resonator, in which a ring type optical waveguide resonates at an appropriate wavelength, can be designed by adding such rare earth members as Er to the high refractive index rods 20e. This optical waveguide can be used as an optical amplifier controlling the gain wavelength, or as an optical waveguide type laser light source which oscillates at a predetermined wavelength.

### (Third embodiment)

The optical waveguide manufacturing method according to the third embodiment is similar to the optical waveguide manufacturing method according to the first or second embodiment, but a particular characteristic of the optical waveguide manufacturing method according to the third embodiment is that hollow pipes are disposed at least in an area to be a part of the optical waveguide in the aggregating step, and holes penetrating in a direction perpendicular to the cut surface remain in the location of pipes disposed in the optical waveguide after the cutting step. "A part of the optical waveguide" here may refer to a core, an area near the boundary face between the core and cladding, or an area of the cladding where evanescent components of waveguide light exist.

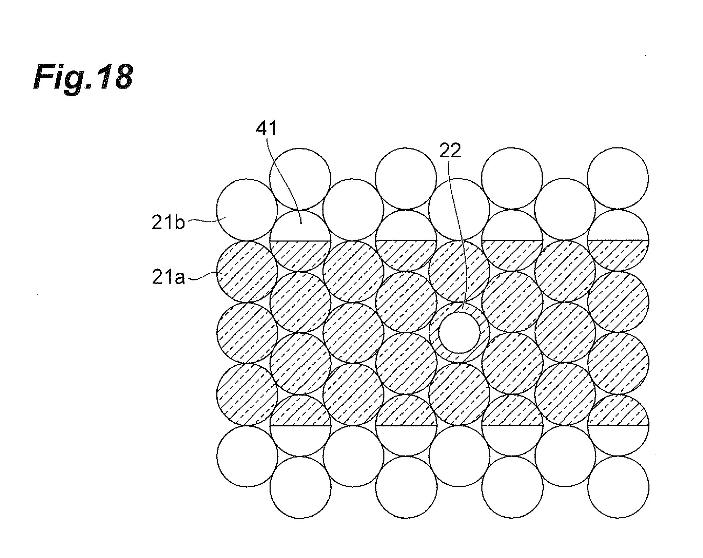

Now an example of a sensor using a planar optical waveguide that is manufactured by the optical waveguide manufacturing method according to the third embodiment is described with reference to Figs. 18 to 23. In the optical waveguide manufacturing method described below, the aggregating step and elongating step are executed twice, just like the optical waveguide manufacturing method according to the second embodiment.

Figs. 18 to 20 are views for explaining then first to third configuration examples of the sensor using the planar optical waveguide that is manufactured by the optical waveguide manufacturing method according to the third embodiment. Figs. 18 to 20 show cross-sectional views perpendicular to the longitudinal direction of the aggregate formed in the second aggregating step S13. In the second aggregating step S 13, plural first elongated bodies 41 formed in the first elongating step S12, plural high refractive index rods 21, plural low refractive index rods 21b and one or more pipes 22 are bundled, and these members are housed inside the pipe for aggregation. Thereby an aggregate is formed. The first elongated body 41 has a structure similar to the elongated body described with reference to Fig. 9.

This aggregate is softened by heating and elongated in the longitudinal direction thereof in the second elongating step S14, whereby a second elongated body is formed. The second elongated body is cut in the cutting step S15, and the cut surface thereof is polished in the polishing step S16. The sensor is manufactured in this way. In Figs. 18 to 20, the high refractive index area is hatched respectively.

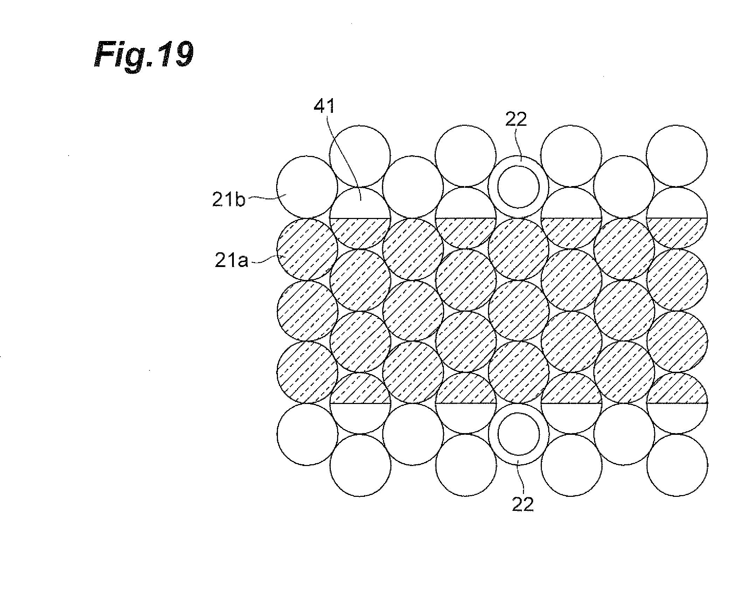

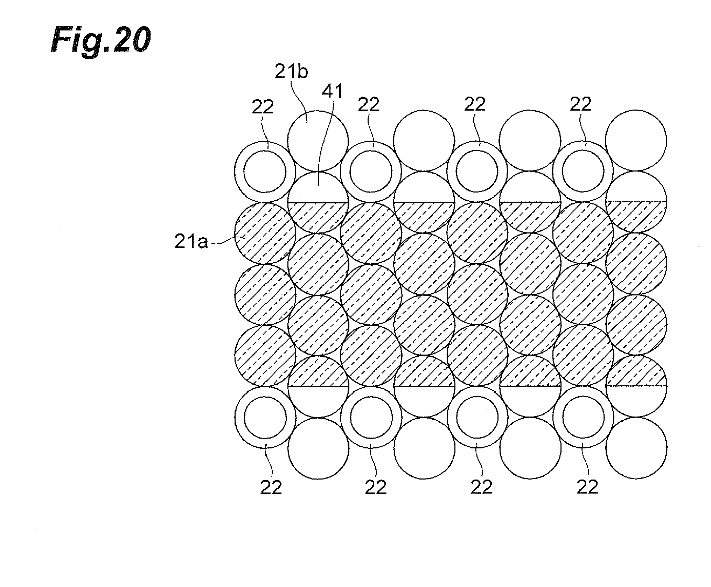

In the sensor of the first configuration example shown in Fig. 18, one pipe 22 is disposed in the core area. In the sensor of the second configuration example shown in Fig. 19, two pipes 22 sandwich the core area in a. state of contacting the core area. In the sensor of the third configuration example shown in Fig. 20, plural pairs of pipes 22 sandwich the core area in a state of contacting the core area. The plural pairs of pipes may be disposed in a boundary area between the core area and cladding area (e.g. area of member 41), although, this is not illustrated.

In this way, hollow pipes 22 are disposed at least in an area to be a part of the optical waveguide in the second aggregating step S13, and holes penetrating in a direction perpendicular to the cut surface remain in these locations in the optical waveguide after the cutting step S15. The sensor using the planar optical waveguide manufactured like this has a structure having holes (holes formed because of pipes 22) penetrating in the perpendicular direction in the core or cladding. This sensor evaluates the presence, type or density of a measurement target object to be inserted into a hole, based on the change of the propagating light which propagates through the core.

It is preferable that these sensors evaluate the presence, type or density of a measurement target object to be inserted into a hole based on the change of loss of the propagating light or change of dependency of loss on wavelength. In this case, light is entered into one edge of the core and emitted from the other edge of the core, and the ratio of the incident light power and emitted light power is measured, whereby the change or loss of the propagating light or change of dependency of loss on wavelength can be measured.

When a measurement target object exists in a hole, propagating light which propagates through the core (partially bleeding into a cladding) attenuates because of absorption and scattering caused by the measurement target object. Therefore the presence of the measurement target object can be evaluated based on the change of propagating light amount. By quantitatively evaluating the change of propagating light amount, not only the presence but also the type, density and so on of the measurement target object can be evaluated.

When attenuation of the propagating light due to the measurement target object is low, the type of disposing the hole in the core as shown is Fig. 18 is suitable; and when attenuation is high, the type of disposing the holes in the cladding as shown in Fig. 19 or Fig. 20 is suitable.

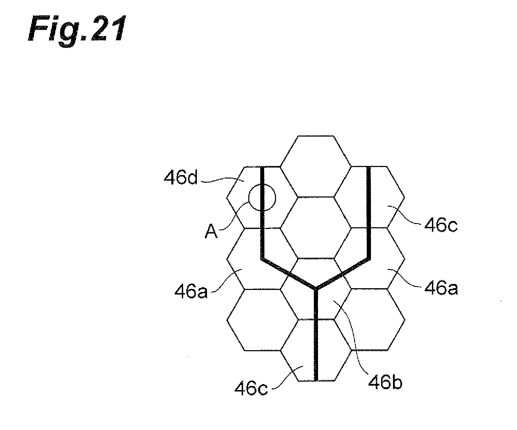

Figs. 21 to 23 are views for explaining the fourth to sixth configuration examples of the sensor using the planar optical waveguide that is manufactured by the optical waveguide manufacturing method according to the third embodiment. Figs. 21 to 23 show cross-sectional views perpendicular to the longitudinal direction of the aggregate formed in the second aggregating step S13. In the second aggregating step S13, plural first elongated bodies 46a, 46b and 46c formed in the first elongating step S12 are bundled, and these members are housed inside the pipe for aggregation. Thereby an aggregate is formed.

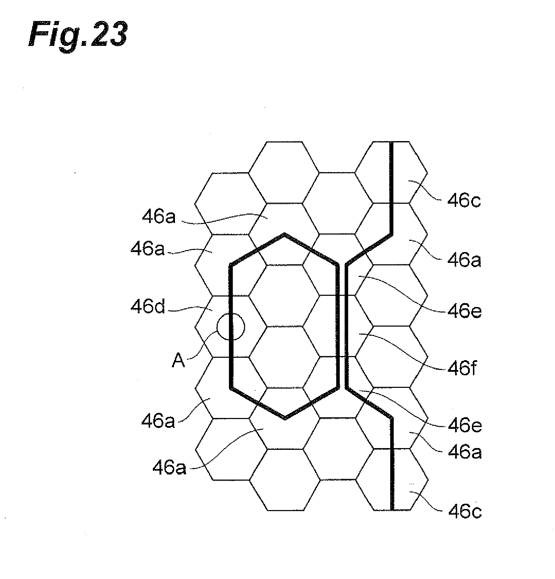

The first elongated bodies 46a, 46b and 46c have structures similar to the elongated body described with reference to Fig. 14. The first elongated bodies 46d, 46e and 46f shown in Fig. 23 are also provided in a similar way as the first elongated bodies 46a, 46b and 46c. The first elongated body 46d in particular is similar to the first elongated body 46c in terms of having a linear high refractive index area, but area A thereof has holes shown in one of Figs. 18 to 20.

This aggregate is softened by heating and elongated in the longitudinal direction thereof in the second elongating step S14, whereby a second elongated body is formed. The second elongated body is cut in the cutting step S15, and the cut surface thereof is polished in the polishing step S16. The sensor is manufactured in this way. In Figs. 21 to 23, a back bold line indicates a high refractive index area on the cross-section.

The sensor of the fourth configuration example shown in Fig. 21 has a configuration of a Y-branch optical waveguide, where light is entered to the core from the bottom end in Fig. 21, and is emitted from the top ends of the two branched cores, and the power of the emitted light is measured. In the cladding (area A in Fig. 21) inside or adjacent to the left side of the branched core, a hole is disposed just like the linear optical waveguides shown in Figs. 18 to 20. Therefore the presence, type and density of the measurement target object can be evaluated based on attenuation of the light emitted from the left core. When a difference from the power of the light emitted from the right core, where a hole does not exist, is determined during this evaluation, the influence of fluctuation of the power of the light which enters the bottom end can be eliminated, and therefore a more accurate evaluation can be implemented. When not only a difference of the power of lights of the left core and the right core at a predetermined wavelength, but also a lost spectrum difference (difference of wavelength dependency of attenuation) between the cores is evaluated, the type and density of the measurement target object can be evaluated more accurately.

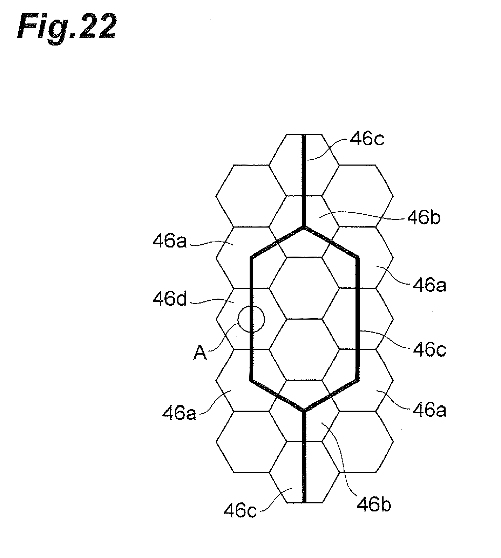

The sensor of the fifth configuration example shown in Fig. 22 has a configuration of the Mach-Zehnder interferometer, where light is entered into the bottom end of the core in Fig. 22, and is emitted from the top of the core, and the power of the emitted light is measured, In the cladding (area A in Fig. 22) inside or adjacent to the core of the left arm of the Mach-Zehnder interferometer, a hole is disposed just like the linear optical waveguides shown in Figs. 18 to 20. Therefore, when a measurement target object enters the hole, the phase difference between the arms of the interferometer changes due to the change of the refractive index, and the power of the interfered light changes. Based on this, the refractive index of the measurement target object can be evaluated.

The sensor of the sixth configuration example shown in Fig. 23 has a configuration of a ring resonator, where light is entered into the bottom end of the core in Fig. 23, and is emitted from the top of the core, and the power of the emitted light or resonance frequency (resonance wavelength) of the ring resonator is measured. In the cladding (area A in Fig. 23) inside or adjacent to the core of the ring resonator, a hole is disposed just like the linear optical waveguides shown in Figs. 18 to 20. When a measurement target object enters a hole, the resonance frequency (resonance wavelength) of the ring resonator changes due to the change of the refractive index. Therefore by allowing light with a predetermined wavelength to enter and measuring the change of loss in this wavelength, or by measuring the change of loss while scanning the wavelength of the incident light so as to measure the resonance wavelength itself, the refractive index of the measurement target object can be evaluated.

In the sensor of the sixth configuration example shown in Fig. 23, plural basic parts that are combined constitute the ring portion of the ring resonator, but as shown in the area (b) of Fig. 17, the ring portion may be constituted by once basic part. Sensitivity to the change of the refractive index may be enhanced by linking plural ring resonators, just like the configuration shown in the area (a) of Fig. 17.

In the configuration examples of the sensor shown in each of Figs. 18 to 23 as well, when only the hole portion could directly contact the outside where the measurement target object exists when the optical waveguide is packaged, then contacting of the measurement target object in portions other than the hole portion in the optical waveguide is prevented, and outside influence on measurement can be eliminated.

The manufacturing method of cutting various optical waveguide preforms was described in the manufacturing method for various waveguides, but a composite type optical waveguide having a new waveguide pattern may be constructed by preparing plural optical waveguides formed by cutting, and disposing the plural optical waveguides so as to join the optical waveguide pattern of each optical waveguide. The plural optical waveguides to be used may be different types or a same type, only when they have a structure suitable for joining mutual waveguide patterns. The plural optical waveguides to be used may include one having a sensor function. When the plural optical waveguides are housed in a package, the composite optical waveguide may be pasted between two transparent plates as shown in Fig. 7.

### Reference Sings List

1 ... optical waveguide; 11... high refractive index area; 12··· low refractive index region; 20 ... member; 21, 21A ···rod; 22, 22A ... pipe; 23, 23A ... pipe for aggregation; 30 ··· aggregate; and 40···elongated body.

## Claims

1. A method of manufacturing a planar optical waveguide preform which is constituted by plural members and has a waveguide pattern of a refractive index distribution on a cross-section thereof perpendicular to the longitudinal direction of the plural members, the method comprising:
an aggregating step of forming an aggregate by arranging the plural members, which includes plural first members and plural second members, so as to constituted the waveguide pattern; and
an elongating step of softening the aggregate by heating, and elongating the aggregate in the longitudinal direction thereof to obtain an elongated body as the optical waveguide preform.

2. A method of manufacturing a planar optical waveguide preform according to claim 1, wherein, in the aggregating step, after the first members and the second members are arranged, the plural members arranged are housed in a pipe for aggregation.

3. A method of manufacturing a planar optical waveguide preform according to claim 1, wherein each of the plural members is comprised of a glass material and has a rod shape or pipe shape.

4. A method of manufacturing a planar optical waveguide preform according to claim 1, wherein each of the first members has a high refractive index region and the second member has a low refractive index region.

5. A method of manufacturing a planar optical waveguide preform according to claim 1, wherein outer shapes of the plural members bundled in the aggregating step match with each other.

6. A method of manufacturing a planar optical waveguide preform according to claim 2, wherein the plural members bundled in the aggregating step are arranged so as for the cross-section thereof to constitute a close-packed structure.

7. A method of manufacturing a planar optical waveguide preform according to claim 1, wherein the elongated body is elongated, in the elongating step, so that the reduction rate of the elongated body in a direction perpendicular to the longitudinal direction of the elongated body is 1% or less.

8. A method of manufacturing a planar optical waveguide preform according to claim 1, wherein the each of second members is a solid material which have the substantially same outer shapes with a hole, and is arranged around the region constituted by the first members.

9. A method of manufacturing a planar optical waveguide preform according to claim 1, wherein each of the first members is a solid material having a high refractive index, each of the second members is a solid material having a low refractive index, and the absolute value of a relative refractive index of each of the second members with respect to each of the first members is 1% or more.

10. A method of manufacturing a planar optical waveguide preform according to claim 1, wherein the plural second members have the substantially same outer shapes with a hole, and are arranged around the region constituted by the first members, so as to form a photonic band gap.

11. A method of manufacturing a planar optical waveguide preform according to claim 1, wherein the preform manufactured by the method of manufacturing an optical waveguide preform according to claim 1 is used as one of the plural members.

12. A method of manufacturing a planar optical waveguide preform according to claim 1, wherein third members are prepared as one constituting the plural members,
wherein, in the aggregating step, the third members are arranged in a boundary portion between the first members and the second members, and
wherein a step of manufacturing the third members has an aggregating step and an elongating step similar to the method of manufacturing an optical waveguide preform according to claim 1, and a waveguide pattern around the boundary portion between the first members and the second members is a waveguide pattern constituted by the third members.

13. A method of manufacturing a planar optical waveguide preform according to claim 1, wherein the first members have eleventh members as a member constituting a part of region along a light propagating direction of the waveguide pattern, and
wherein a step of manufacturing the eleventh members has an aggregating step and an elongating step similar to the method of manufacturing an optical waveguide preform according to claim 1, and a waveguide pattern, constituted by the part of the region along the light propagating direction of the of the waveguide pattern, corresponds to a waveguide pattern constituted by the eleventh members.

14. A method of manufacturing a planar optical waveguide preform according to claim 1, wherein the first members have eleventh members and twelfth members as members constituting regions adjacent along a light propagating direction of the waveguide pattern,
wherein a steps of manufacturing the eleventh members and the twelfth members has an aggregating step and an elongating step similar to the method of manufacturing an optical waveguide preform according to claim 1, and a waveguide pattern, constituted by the regions adjacent along the light propagating direction of the waveguide pattern, corresponds to a waveguide pattern constituted by the eleventh members and the twelfth members.

15. A method of manufacturing a planar optical waveguide preform according to any one of claims 1 and 11 to 14, wherein, in the aggregating step, a hollow pipe is arranged in a region through which light propagates.

16. A method of manufacturing an optical waveguide, comprising a cutting step of cutting the preform, manufactured by a method of manufacturing an optical waveguide preform according to any one of claims 1 and 11 to 14, along a plane perpendicular to the longitudinal direction of the preform, to manufacture the optical waveguide.

17. A method of manufacturing an optical waveguide according to claim 16, further comprising a polishing step of optical-polishing the cut surface created by cutting in the cutting step.

18. A method of manufacturing an optical waveguide, comprising the steps of:
preparing a first optical waveguide and a second optical waveguide, which are manufactured respectively by the method of manufacturing an optical waveguide according to claim 16; and
manufacturing an optical waveguide in which an emitting end face of the first optical waveguide and an entering end face of the second optical waveguide are arranged so as for them to optically couple on a same plane.

19. A sensor comprising a planar optical waveguide having a waveguide pattern on a predetermined surface, wherein a hole, penetrating in a direction perpendicular to the predetermined surface, is formed in a region of the waveguide pattern through which light propagates.

20. A sensor according to claim 9, wherein a Mach-Zehnder interferometer is constituted by the waveguide pattern, and the hole is arranged at or near the Mach-Zehnder interferometer, so that the intensity of interfering light is changed by an object to be measured which has been inserted in the hole, whereby the phase of the propagating light changes.

21. A sensor according to claim 19, wherein a ring resonator is constituted by the waveguide pattern, and the hole is arranged at or near the ring resonator, so that the intensity of resonating light, or the wavelength of resonance is changed by an object to be measured which has been inserted in the hole, whereby the phase of the propagating light changes.

22. A detection method comprising the steps of:
setting the object to be measured into the hole;
measuring the propagating light which propagates through the optical waveguide, by using the sensor according to claim 19; and
detecting the object to be measured.

23. A detection method according to claim 22, wherein any one of presence, type or density of the object to be measured is detected based on the change of loss or wavelength dependency of loss of the propagating light.

24. A detection method according to claim 22, wherein any one of presence, type or density of the object to be measured is detected based on the change of phase of the propagating light.
